# EUROPÄISCHE PATENTSCHRIFT

(11) **EP 2 777 806 B1**
(45) Veröffentlichungstag und Bekanntmachung des Hinweises auf die Patenterteilung: **08.05.2019**
(21) Anmeldenummer: 13158734.7
(22) Anmeldetag: 12.03.2013
(51) Int. Cl.: B01J 2/04

(54) **VORRICHTUNG ZUR HERSTELLUNG VON TROPFEN AUS EINEM FLIESSFÄHIGEN MATERIAL**
DEVICE FOR THE PRODUCTION OF DROPS FROM A FLOWABLE MATERIAL
DISPOSITIF DE FABRICATION DE GOUTTES À PARTIR D'UN MATÉRIAU POUVANT S'ÉCOULER

(43) Veröffentlichungstag der Anmeldung: 17.09.2014
(73) Patentinhaber: GeniaLab BioTechnologie Produkte Und Dienstleistungen GmbH, 38118 Braunschweig (DE)
(72) Erfinder: Jahnz, Ulrich, 38118 Braunschweig (DE); Wittlich, Peter, 38118 Braunschweig (DE)
(74) Vertreter: dompatent von Kreisler Selting Werner - Partnerschaft von Patent- und Rechtsanwälten mbB

(56) Entgegenhaltungen:
- EP-A1- 2 559 480
- EP-A2- 0 241 299
- WO-A2-84/02255

## Beschreibung

Die Erfindung betrifft eine Vorrichtung zur Herstellung von Tropfen aus einem fließfähigen Material z. B. zur Herstellung von Kugeln, zur Benetzung/Beschichtung von (Ober-)Flächen oder zur Dosierung von Flüssigkeiten.

Kugelförmige Partikel können in vielerlei Hinsicht eingesetzt werden. Beispiele hierfür sind die Nahrungsmittelindustrie zur Herstellung von verzehrbaren Kern-Hülle-Kugeln oder von Vollkugeln, die beim Zerbeißen oder Zerdrücken eine verzehrbare Substanz abgeben. Kugelförmige Partikel finden aber auch Anwendung bei Körperpflege-, Reinigungs- und Haushaltsprodukten sowie bei Kosmetika und Medikamenten und als Spielzeugartikel (beispielsweise Spielzeug-Kugeln) oder zu Dekorationszwecken als z. B. Wohnaccessoire. Weitere Anwendungsgebiete sind insbesondere in der Chemie und hier insbesondere bei verfahrenschemischen Anlagen und Prozessen zu finden.

Für die Herstellung von kugelförmigen Partikeln bedient man sich sogenannter Vertropfungsverfahren, bei denen aus einer Austrittsöffnung fließfähiges, vertropfungsfähiges Material austritt, wobei der austretende Materialstrang in einzelne Teilvolumina unterteilt wird, die, wenn sie von der Austrittsöffnung abtropfen, sich zu Kugeln formen, welche dann in geeigneter Weise weiterverarbeitet werden, um das jeweilige Zwischen- oder Endprodukt zu erhalten. Beispiele für Vertropfungsverfahren der unterschiedlichen Arten sind beispielhaft beschrieben in DE-A-41 25 133, DE-C-44 24 998, DE-A-199 06 509, DE-A-10 2011 004 965, EP-B-1 073 512 und EP-B-1 470 184.

Gemäß diesem Stand der Technik wird die Tropfenerzeugung durch Vibration oder durch Strahlzerlegung bewirkt. Es wurde bereits auch schon beschrieben, das aus einer Austrittsöffnung austretende Material durch einen Faden, Draht odgl. Element abzustreifen (siehe Dissertation von Andreas Bettin "Einschlussimmobilisierung von Nitrifikanten in Polycarbamoylsulfonathydrogel und Adsorptionsimmobilisierung von Nitritoxidierern auf porösen Silikonträgern: Entwicklung, Optimierung und mathematische Modellierung" vom 25. September 2000).

Für die großtechnische Herstellung von kugelförmigen Körpern ist es vorteilhaft, wenn gleichmäßig große kugelförmige Partikel hergestellt werden können, und zwar vom Anfahren der Vertropfungsanlage an. Die Herstellung gleichförmiger und gleich großer kugelförmiger Partikel ist für die sich an die Vertropfung anschließenden Prozessschritte von großer Bedeutung. So kommt es beispielswiese bei der weiteren Behandlung der Partikel nicht bzw. kann zu Entmischungseffekten der kugelförmigen Partikel; auch wirken sich dann, wenn die Partikel gleichförmig sind, chemische oder biochemische und/oder physikalische Weiter- oder Nachbehandlungen stets gleichförmig auf die Partikel aus, was ebenfalls der Qualitätsverbesserung und Eigenschaftsvergleichmäßigung der Zwischen- und Endprodukte dient.

Aus EP-A-0 241 299 ist eine Vorrichtung zur Herstellung von Tropfen aus einem fließfähigen Material gemäß dem Oberbegriff des Anspruchs 1 bekannt.

Eine Vorrichtung zur Herstellung von Tropfen aus einem fließfähigen Material ist ferner in WO-A-84/02255 beschrieben.

Insoweit ist es eine Aufgabe der Erfindung, eine Vorrichtung anzugeben, mit der sich gleichförmige Tropfen (beispielsweise zur Herstellung gleichförmiger Kugeln, zur Benetzung von Oberflächen oder zu Dosierungszwecken) herstellen lassen.

Zur Lösung dieser Aufgabe wird mit der Erfindung eine Vorrichtung zur Herstellung von Tropfen aus einem fließfähigen Material vorgeschlagen, wobei die Vorrichtung versehen ist mit den Merkmalen des Anspruchs 1. Einzelne Ausgestaltungen der Erfindung sind Gegenstand der Unteransprüche.

Die erfindungsgemäße Vorrichtung weist ein Reservoir für das fließfähige, zu vertropfende Material auf (nachfolgend mitunter auch Tropfenmaterial genannt). Bei dessen Material handelt es sich im Regelfall um eine mehr oder weniger flüssige, breiige, pastöse Masse. Damit aus dem fließfähigen Material eine Vielzahl von Tropfen gleichzeitig erzeugt werden können, weist die erfindungsgemäße Vorrichtung eine in Fluidverbindung mit dem Reservoir stehende Verteilerkammer mit einer Einlassöffnung zum Zuführen des fließfähigen Tropfenmaterials und mit mehreren Austrittsöffnungen für den Austritt des fließfähigen Materials in Form von einzelnen Materialaustrittssträngen auf. Durch eine zweckmäßigerweise vorhandene Abstreif- oder allgemein Trennvorrichtung wird der austretende Materialstrang von der Austrittsöffnung abgetrennt, und zwar z. B. dann, wenn die austretende, noch an der Austrittsöffnung "hängende" Materialstrangmenge gleich der Menge der herzustellenden Kugel ist. Als Trenneinheit kommen hier mechanische Trennvorrichtungen (beispielsweise durch einen Faden, einen Schaber o.dgl.) oder aber auch Strahltrenneinheiten wie beispielsweise ein Luft- oder Flüssigkeitstrennstrahl in Frage. Es sei an dieser Stelle hervorgehoben, dass die Trenneinheit zum Abstreifen, Abscheren oder zum auf andere Weise erfolgenden Abtrennen eines an einer Austrittsöffnung "hängenden" Teilvolumens zum Gegenstand einer vorteilhaften Ausgestaltung der Erfindung zu zählen ist (siehe auch weiter unten in der Beschreibung).

Erfindungsgemäß ist jede Austrittsöffnung der Verteilerkammer mit einem Austrittsstutzen versehen, innerhalb dessen ein in der Austrittsöffnung endender Austrittskanal ausgebildet ist. Dieser Austrittskanal steht nun in Fluidverbindung mit dem Innenraum der Verteilerkammer, was durch eine in den Austrittsstutzen eingearbeitete Drosselbohrung o.dgl. Drossel-Kanal erfolgt. Durch diese Drosselbohrung kommt es zu einem erhöhten Strömungswiderstand und damit zu einer Druckdifferenz des fließfähigen Materials (in Strömungsrichtung des Materials betrachtet) vor und hinter der Drosselbohrung. Diese Druckdifferenz des fließfähigen Materials muss größer sein als die Druckdifferenz, die notwendig ist, um das fließfähige Material von der Einlassstelle der Verteilerkammer zu den jeweiligen Drosselbohrungen zu fördern. Damit kann sich die Verteilerkammer zunächst mit dem fließfähigen Material ausfüllen, bevor dann anschließend durch sämtliche Austrittsstutzen gleichzeitig und gleichförmig fließfähiges Material austreten kann. An jeder Eingangsöffnung der Drosselbohrungen der Austrittsstutzen, die die innerhalb der Verteilerkammer voranschreitende Front aus fließfähigem Tropfenmaterial erreicht, bildet sich also dort ein Strömungswiderstand für das fließfähige Material, wodurch verhindert wird, dass fließfähiges Material bereits aus den zur Verteilerkammereinlassöffnung näherliegenden Austrittsstutzen austritt, ohne dass das fließfähige Material die weiter entfernt liegenden Austrittsstutzen erreicht hat. Desweiteren wird sichergestellt, dass dann, wenn an sämtlichen Drosselbohrungs-Einlassöffnungen fließfähiges Material ansteht, dieses dann durch sämtliche Austrittsstutzen gleichmäßig hindurchfließt. Das Abtropfen erfolgt auch bei gleichem Fluss nicht zwangsläufig gleichmäßig, was aber grundsätzlich durch eine genaue Steuerung der das Fließenlassen des Materials beeinflussenden Betriebsparameter möglich sein könnte. Aus Vereinfachungsgründen wird daher vorteilhafterweise von jedem Materialaustrittsstrang jeweils das den Tropfen bildende Teilvolumen "abgeschnitten, abgeschert o.dgl. abgetrennt".

Die Querschnittsform der Drosselbohrung ist nach der Erfindung grundsätzlich beliebig, solange sich der erwünschte Strömungswiderstand und damit die erforderliche Druckdifferenz zwischen dem Druck, unter dem das fließfähige Material während der Tropfenproduktion steht, und dem Druck, unter dem es aus der Austrittsöffnung austritt (Umgebungsdruck), einstellt. Entscheidend ist, dass der Druck, mit dem das fließfähige Material in die Verteilerkammer gelangt (was beispielsweise durch eine Förderpumpe oder aber auch einfach durch den hydrostatischen Druck, unter dem das fließfähige Material steht, bestimmt ist) so gewählt ist, dass sich zunächst die Verteilerkammer mit fließfähigem Material füllen kann, bevor anschließend durch sämtliche Austrittsöffnungen (dann notwendigerweise gleichzeitig) fließfähiges Material austritt und abtropft. So kann die Drosselbohrung beispielsweise konisch ausgebildet sein. Es ist auch möglich, dass die Drosselbohrung als Einlassöffnung in den Austrittskanal des Austrittsstutzens ausgebildet ist. Auch die Eintrittsöffnung eines Austrittskanals, der sich von der Austrittsöffnung des Austrittsstutzens bis zu einer Einlassöffnung verjüngt bzw. im Bereich seiner Einlassöffnung verjüngt, ist im Rahmen der Erfindung mit dem Begriff "Drosselbohrung" gemeint.

In weiterer vorteilhafter Ausgestaltung der Erfindung kann vorgesehen sein, dass der Austrittskanal des Austrittsstutzens als Sacklochausnehmung mit einer Innenseite und einem Boden ausgebildet ist und dass die Drosselbohrung im Bodenbereich der Sacklochausnehmung entweder an dem Boden oder an der Innenseite der Sacklochausnehmung endet. Ein derartiger Austrittsstutzen lässt sich fertigungstechnisch vorteilhaft realisieren. Die Drosselbohrung ist dabei z. B. als in einer zylindrischen Wand des Austrittsstutzens angeordnete Drosselöffnung ausgebildet.

Um zuverlässiger gewährleisten zu können, dass das über die Drosselbohrung in den Austrittskanal eines Austrittsstutzens gelangende fließfähige Material zunächst innerhalb des Austrittskanals bis zum Austrittsstutzen strömt, um erst danach unter Bildung eines Tropfens aus der Austrittsöffnung auszutreten, ist es zweckmäßig, wenn die axiale Verlängerung der Drosselbohrung oder von deren in den Austrittskanal führenden Einmündungsöffnung in den Austrittskanal hinein nicht durch die Austrittsöffnung hindurch verläuft. Dadurch wird erreicht, dass aus der Drosselbohrung austretendes fließfähiges Material nicht direkt durch den Austrittskanal hindurch gelangt, sondern vielmehr unter Benetzung der Austrittskanal-Innenwand den Austrittskanal nach und nach füllt, um sich dann in Form einer fortschreitenden Flüssigkeitsfront bis zur Austrittsöffnung vorzubewegen.

Hinsichtlich der Erzielung des zuvor beschriebenen Effekts ist es günstig, wenn die Drosselbohrung in einem Winkel ihrer Achse von ungleich 0°, insbesondere in einem Winkel von größer oder kleiner 45° und vorzugsweise in einem Winkel von im Wesentlichen 90° oder auch größer als 90° (bis kleiner 180°) zur Achse des Austrittskanals in diesen einmündet. Ebenfalls ist es möglich, die direkte axiale Verbindung zwischen Ende der Drosselbohrung und der Austrittsöffnung durch Einbringung geeigneter Prallelemente (z.B. Prallteller, zwei- oder dreidimensionales Siebgewebe oder Quersteg) zu verbauen.

In weiterer vorteilhafter Ausgestaltung der Erfindung kann vorgesehen sein, dass der Stutzen zwei gegenüberliegende Enden aufweist, wobei an dem einen Ende die Austrittsöffnung angeordnet ist und sich an dem anderen Ende die Drosselbohrung befindet. Hier kann ferner mit Vorteil vorgesehen sein, dass das mit der Drosselbohrung versehene Ende des Austrittsstutzens ein Gewinde zum Gewindeeingriff mit einer Gewindeöffnung der Verteilerkammer aufweist oder auf andere Weise an der Verteilerkammer insbesondere abnehmbar gehalten ist, z. B. durch Bajonett- oder Klemmverschluss oder eine andere Art von Schnellverschluss.

Günstig ist es, die Tropfenbildung unter Ausnutzung der Gravitationskraft erfolgen zu lassen. In diesem Fall erstrecken sich also von der Unterseite der Verteilerkammer aus dieser die Austrittsstutzen heraus. Die Verteilerkammer kann dabei als flache Kammer oder aber auch als Rohrregister mit einem oder mehreren Zulaufrohren und von diesen abzweigenden Abzweigrohren, an denen dann beispielsweise die Austrittsstutzen angeordnet sind, ausgebildet sein. Unterhalb der Verteilerkammer befindet sich dann beispielsweise eine Auffangvorrichtung für die herabfallenden Tropfen, die während ihres Falls, ggf. abhängig von der Fallhöhe, bereits Kugelform annehmen. Zweckmäßig ist es, wenn die Tropfen in eine Flüssigkeit fallen, die beispielsweise durch einen unterhalb der Verteilerkammer angeordneten Tropfenauffangbehälter bereitgestellt wird. In der Flüssigkeit kann es zu physikalischen, chemischen bzw. biochemischen Reaktionen mit dem fließfähigen Material kommen, und zwar mit dem Ziel der Erstarrung der Kugeln zumindest in deren Außenbereich. Die Flüssigkeit kann aber auch inert gegenüber dem fließfähigen Tropfenmaterial sein.

Die Tropfen können auch zur Benetzung von Flächen (z. B. sich vorbewegenden Materialbahnen) genutzt werden. Wenn z. B. ein Substrat mit einem Muster aus lokal begrenzten tropfenförmigen Benetzungen versehen werden soll (beispielsweise für Tests in der Biologie und Diagnostik sowie Analytik), ist dies ebenfalls unter Verwendung der Erfindung möglich. Auch zu Zwecken der Dosierung von fließfähigen Materialien kann die Erfindung eingesetzt werden.

Wie bereits oben erwähnt, kann der mechanische Abtrennungsvorgang sowohl über feste Körper (Draht, Faden, ...) als auch Fluidstrahlen als Abstreifelement erfolgen. Auch Vibrationsmechanismen sollen nicht ausgeschlossen werden, bei der erfindungsgemäßen Vorrichtung Anwendung zu finden. Zweckmäßig aber ist es, wenn als Trenneinheit eine Abstreifeinheit mit mindestens einem Abstreifelement mit einer Abstreifkante gewählt wird, welches dann nach Art eines Schabers, eines Rakels oder eines Spachtels über die Austrittsöffnung bewegt wird, um von dem austretenden Materialaustrittsstrang ein Teilvolumen abzutrennen. Als Abstreifelement haben sich insbesondere ein Faden, ein Draht, ein Seil, eine Schnur o.dgl. im Querschnitt insbesondere rundes Element bewährt. In diesem Zusammenhang sei darauf hingewiesen, dass "rund" neben "kreisrund" auch "elliptisch" sowie andere Rundformen umfasst. Alternativ kann das Abstreifelement (zumindest im Bereich seiner Abstreifkante) auch eckig, beispielsweise dreieckig, oder anderweitig mit polygonalem Querschnitt ausgestattet sein und/oder zumindest an seiner Abstreifkante für das fließfähige Tropfenmaterial hydrophob ausgebildet (z. B. durch Beschichtung oder Oberflächenbearbeitung) sein (z. B. Beschichtung durch PTFE).

Wie bereits eingangs erwähnt, finden Vertropfungsanlagen und insbesondere auch die erfindungsgemäße Vorrichtung zur Herstellung von Tropfen aus fließfähigem Material insbesondere Anwendung (i) zur Herstellung von das fließfähige Material aufweisenden Kugeln für Körperpflege-, Reinigungs-, Haushalts- und Nahrungsmittel, Getränke, Kosmetika, Medikamente und/oder andere industrielle Anwendungen z. B. in der Chemie, insbesondere bei verfahrenschemischen Anlagen und Prozessen oder als Spielzeugartikel oder zu Dekorationszwecken als z. B. Accessoires, oder (ii) zur Benetzung von Oberflächen oder Dosierung von Flüssigkeiten.

Die oben genannte Aufgabe wird also gemäß Anspruch 1 und/oder der Unteransprüche z.B. durch Verwendung von Austrittselementen bei Vertropfungsanlagen für fließfähiges Material zur Herstellung von Tropfen aus dem fließfähigen Material gelöst, wenn die Austrittselemente jeweils versehen sind mit
- einem Austrittsstutzen mit einer Außenseite und einem Austrittskanal, der in einer Austrittsöffnung in der Außenseite des Austrittsstutzens endet, und
- einer Drosselbohrung, die sich von der Außenseite des Austrittsstutzens aus bis zum Austrittskanal erstreckt.

Ein derartiges Austrittselement kann zweckmäßigerweise ferner dadurch spezifiziert sein, dass der Austrittskanal des Austrittsstutzens als Sacklochausnehmung mit einer Innenseite und einem Boden ausgebildet ist und dass die Drosselbohrung im Bodenbereich der Sacklochausnehmung entweder an dem Boden oder an der Innenseite der Sacklochausnehmung endet.

Ferner ist es von Vorteil, wenn die axiale Verlängerung der Drosselbohrung oder von deren in den Austrittskanal führenden Einmündungsöffnung in den Austrittskanal hinein nicht durch die Austrittsöffnung hindurch verläuft oder dass die Drosselbohrung in einem Winkel ihrer Achse von ungleich 0°, insbesondere in einem Winkel von größer oder kleiner 45° und vorzugsweise in einem Winkel von im Wesentlichen 90° oder auch von zwischen 90° bis kleiner als 180° zur Achse des Austrittskanals in diesen einmündet. Ebenfalls ist es möglich, die direkte axiale Verbindung zwischen Ende der Drosselbohrung und der Austrittsöffnung durch Einbringung geeigneter Prallelemente (z.B. Prallteller, zwei- oder dreidimensionales Siebgewebe oder Quersteg) zu verbauen. Schließlich kann bei dem Austrittselement mit Vorteil noch vorgesehen sein, dass die Drosselbohrung als in einer zylindrischen Wand des Austrittsstutzens angeordnete Drosselöffnung ausgebildet ist oder dass der Stutzen zwei gegenüberliegende Enden aufweist, wobei an dem einen Ende die Austrittsöffnung angeordnet ist und sich an dem anderen Ende die Drosselbohrung befindet oder dass das mit der Drosselbohrung versehene Ende des Austrittsstutzens ein Gewinde zum Gewindeeingriff mit einer Gewindeöffnung der Verteilerkammer aufweist oder auf andere Weise an der Verteilerkammer insbesondere abnehmbar gehalten ist, z. B. durch Bajonett- oder Klemmverschluss oder eine andere Art von Schnellverschluss.

Die Erfindung wird nachfolgend anhand eines Ausführungsbeispiels sowie unter Bezugnahme auf die Zeichnung näher erläutert. Im Einzelnen zeigen dabei:
- Fig. 1: schematisch die Hauptkomponenten eines Ausführungsbeispiels der erfindungsgemäßen Vorrichtung zur Herstellung von Tropfen aus einem fließfähigen Material,
- Fig. 2: eine vergrößerte Ansicht eines Austrittsstutzens, wie er bei der Vorrichtung nach Anspruch 1 Verwendung findet,
- Fign. 3 bis 7: die fluidtechnische Situation in der Verteilerkammer beim Anfahren der Vorrichtung, d. h. beim Befüllen der Verteilerkammer, mit der Besonderheit, dass sich die Verteilerkammer zunächst mit fließfähigem Material füllt, bevor dieses dann gleichmäßig durch sämtliche Austrittsstutzen austritt,
- Fig. 8: die Situation bei der Tropfenerzeugung kurz vor dem Abstreifen bzw. Abtrennen der ersten Teilvolumina von den aus den Austrittsstutzen austretenden Materialaustrittssträngen durch Bewegung von den einzelnen Austrittsstutzen bzw. Gruppen von Austrittsstutzen zugeordneten Abstreifelementen als Beispiel für eine Abtrenneinheit,
- Fig. 9: die Situation, in der die Teilvolumina abgeschnitten sind und sich die Tropfen beginnen zu bilden sowie als kugelförmigen Partikeln zu formen und

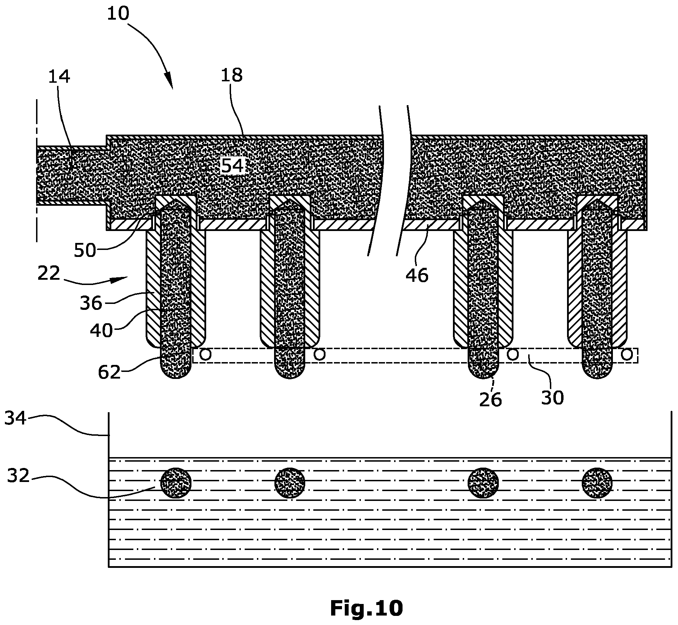

- Fig. 10: eine ähnliche Situation wie gemäß Fig. 8, wobei die nächsten abzustreifenden Tropfen durch Zurückbewegung der Abstreifelemente abgetrennt werden.

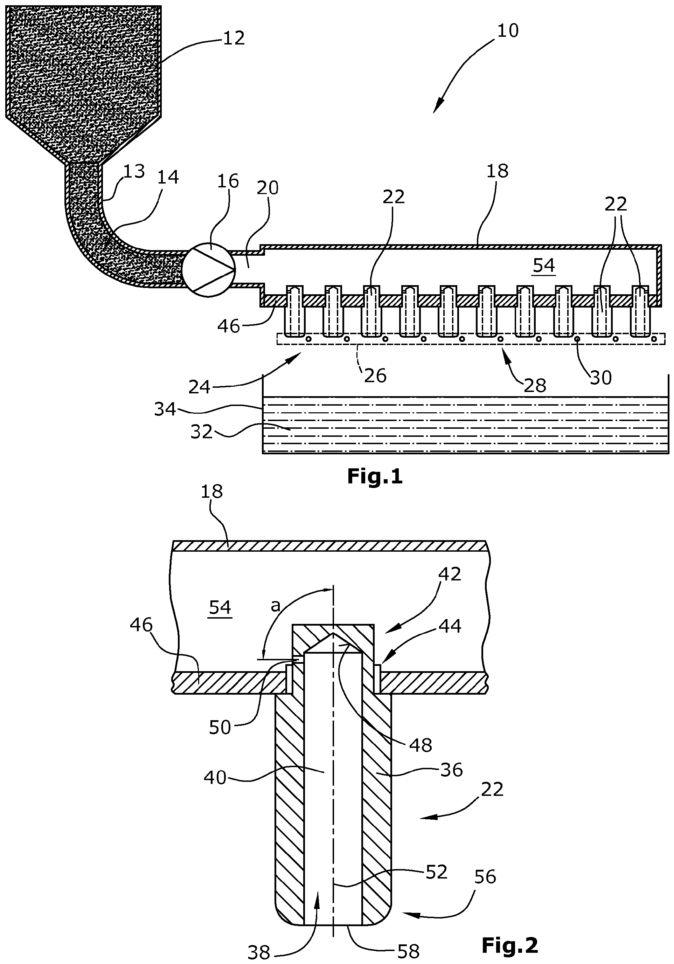

In Fig. 1 ist die allgemeine Anordnung der Hauptkomponenten einer Vorrichtung 10 zur Herstellung von Tropfen aus einem fließfähigen Material, d. h. zur Vertropfung von fließfähigem Material gezeigt. Die Vorrichtung 10 umfasst ein Reservoir 12 für das fließfähige Material, das aus dem Reservoir 12 über eine Leitung 13, ggf. mit Hilfe einer Pumpe 16 in eine Verteilerkammer 18 überführt wird. Die Verteilerkammer 18 weist eine oder mehrere Einlassöffnungen 20 und eine Vielzahl von Austrittsstutzen 22 auf, die unterschiedlich weit entfernt von der einen oder mehreren Einlassöffnungen 20 angeordnet sind. Aus den Austrittsstutzen 22 gelangen Materialaustrittsstränge (in Fig. 1 nicht gezeigt), die mit Hilfe einer Trennvorrichtung 24 von den Austrittsstutzen 22 abgetrennt werden, um Tropfen und in der Folge kugelförmige Partikel zu bilden. Die Trennvorrichtung ist in diesem Ausführungsbeispiel als Abstreifeinheit 26 ausgebildet, die als Abstreifelemente 28 mehrere Fäden, Drähte odgl. strangförmige Trennelemente 30 aufweist, welche an den Austrittsstutzen 22 entlang streichen bzw. mit geringem Abstand zu diesen bewegt werden, um die austretenden Materialaustrittsstränge in Teilvolumina zu unterteilen. Die so entstehenden Tropfen fallen in diesem Ausführungsbeispiel in eine Flüssigkeit 32 eines Tropfenauffangbehälters 34.

Die schematisch in Fig. 1 gezeigte Vorrichtung 10 kann beispielsweise für die Herstellung von in der Nahrungsmittelindustrie, insbesondere in der Getränkeindustrie verwendbare Kern-Hülle-Kugeln (sogenannte Fruchtperlen, auch Popping Boba® oder Bubbles) eingesetzt werden. Grundsätzlich gilt bei Vertropfungsanlagen, dass das fließfähige Material eine gewisse Mindestviskosität aufweisen sollte, damit die Tropfenherstellung reproduzierbar und zuverlässig genau erfolgt. Für den Anwendungsfall der Nahrungsmittelindustrie eignet sich als fließfähiges Material beispielsweise Alginat oder Pektinat oder allgemein gesprochen Polysacharide bzw. Zuckerderivate. Die Polymere dieser Substanzen können zur Gelbildung ionisch vernetzt werden, und zwar beispielsweise durch ein- oder mehrwertige Kalziumionen, die sich dementsprechend in der Flüssigkeit 32 befinden. Auch der umgekehrte Prozess, also dass die zu vertropfende Flüssigkeit (fließfähiges Material 14) das Vernetzungsmittel aufweist (z. B. in einer Stärkelösung odgl. als Verdicker) und die zu vernetzenden Polymere in der Flüssigkeit 32 enthalten sind, ist denkbar. Die hierbei in beiden Fällen ablaufenden physikalischen, chemischen bzw. biochemischen Reaktionen sind hinlänglich bekannt und bedürfen an dieser Stelle keiner weiteren Erläuterungen. Mit der Vorrichtung 10 lassen sich insbesondere sämtliche Arten von Polyelektrolyten, die mit Ionen vernetzbar sind, verarbeiten. Auch andere Gelbildungsprozesse (z. B. unter Einfluss von Sauerstoff) oder Erstarrungsprozesse (z. B. mittels (flüssigem) Stickstoff) sind mit der Vorrichtung 10 kombinierbar. Schließlich können die mit der Vorrichtung 10 hergestellten Tropfen bzw. Kugeln zunächst auch, ohne dass eine chemische oder biochemische Reaktion odgl. erfolgt, in der Flüssigkeit 32 verbleiben, die in diesen Fällen dann dementsprechend inert gegenüber dem fließfähigen Material sein sollte.

In Fig. 2 ist im Querschnitt und vergrößert die Ausbildung eines Austrittsstutzens 22 gezeigt. Der Austrittsstutzen 22 weist einen im Wesentlichen zylindrischen Körper 36 auf, durch den sich axial ein als Sacklochausnehmung 38 (in diesem Ausführungsbeispiel in Form einer Sacklochbohrung) ausgebildeter Austrittskanal 40 erstreckt. Das geschlossene axiale Ende 42 des Austrittsstutzens 22 ist durch eine Öffnung 44 in der Bodenwand 46 der Verteilerkammer 18 eingesetzt, wobei jeder Austrittsstutzen 22 in diesem Ausführungsbeispiel in der Öffnung 44 in Gewindeeingriff mit der Bodenwand 46 steht. Im Bereich der Bodenwand 48 der Sacklochausnehmung 38 führt radial von außen in den Austrittskanal 40 eine Drosselbohrung 50 hinein. In diesem Ausführungsbeispiel erstreckt sich die Drosselbohrung 50 im Wesentlichen senkrecht zur Achse 52 des Austrittskanals 40. Die Drosselbohrung 50 befindet sich im in die Bodenwand 46 der Verteilerkammer 18 eingeschraubten Zustand des Austrittsstutzens 22 oberhalb der Bodenwand 46. Über die Drosselbohrung 50 steht also der Hohlraum 54 der Verteilerkammer 18 in Fluidverbindung mit dem Austrittskanal 40 des Austrittsstutzens 22, wobei der Austrittskanal 40 seinerseits an dem dem geschlossenen axialen Ende 42 gegenüberliegenden axialen Ende 56 des Austrittsstutzens 22 in einer Austrittsöffnung 58 endet, die insoweit als eine der Austrittsöffnungen der Verteilerkammer 18 betrachtet werden kann.

Wie anhand von Fig. 2 zu erkennen ist, weist die Drosselbohrung 50 einen wesentlich kleineren Querschnitt auf als der Austrittskanal 40 und insbesondere als die Austrittsöffnung 58. Es bedarf also einer Druckdifferenz des fließfähigen Materials 14 innerhalb der Verteilerkammer 18 gegenüber dem Druck im Austrittskanal 40, damit das fließfähige Material 14 durch die Drosselbohrung 50 hindurch gelangt. Diese Druckdifferenz bzw. der sich aufbauende Strömungswiderstand wird nun erfindungsgemäß genutzt, um zu erreichen, dass, bevor aus einem der Austrittsstutzen 22 nach dem Anfahren der Vorrichtung 10 fließfähiges Material 14 austritt, dieses zunächst die Verteilerkammer 18 ausfüllt, so dass das fließfähige Tropfenmaterial 14 zunächst nach und nach an den Drosselbohrungen 50 der Austrittsstutzen 22 ansteht und erst dann, wenn alle Drosselbohrungen 50 "benetzt" sind, der weitere Transport durch dann sämtliche Drosselbohrungen 50 gleichzeitig und durch sämtliche sich daran anschließende Austrittskanäle 40 gleichmäßig erfolgt. Während der Anfahrphase der Vorrichtung 10, in der sich die Verteilerkammer 18 mit dem zu vertropfenden fließfähigen Tropfenmaterial 14 füllt aber auch während des sonstigen Betriebs der Vorrichtung bei der Erzeugung der Tropfen, sind also die Strömungsverhältnisse innerhalb der Verteilerkammer 18 und durch die Drosselbohrungen 50 dergestalt, dass die Druckdifferenz, d. h. der Strömungswiderstand, zum Befüllen/Durchströmen der Verteilerkammer 18 stets geringer ist als die durch die Drosselbohrung 50 eines Austrittsstutzens 22 gegebene Druckdifferenz bzw. den gegebenen Strömungswiderstand. In die entsprechenden Überlegungen zur strömungstechnischen Auslegung der Verteilerkammer und der Austrittsstutzen gehen selbstverständlich die strömungstechnischen Eigenschaften des fließfähigen Materials 14, und insbesondere dessen Viskosität, ein.

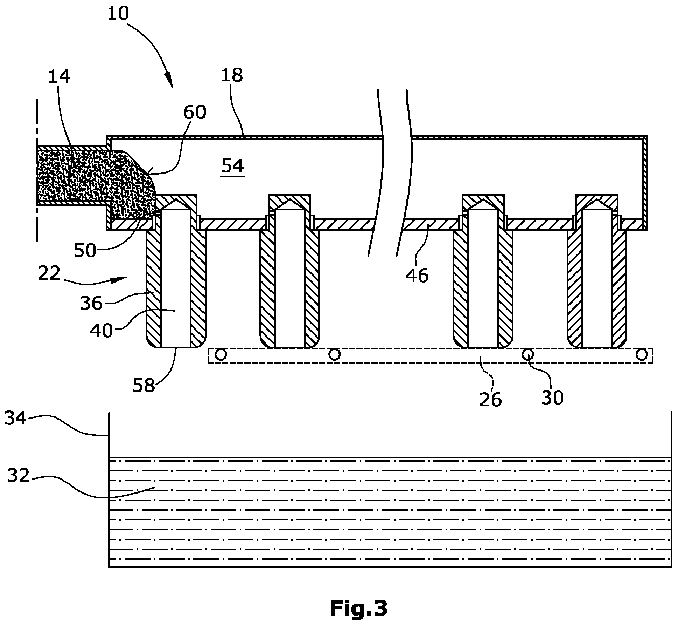

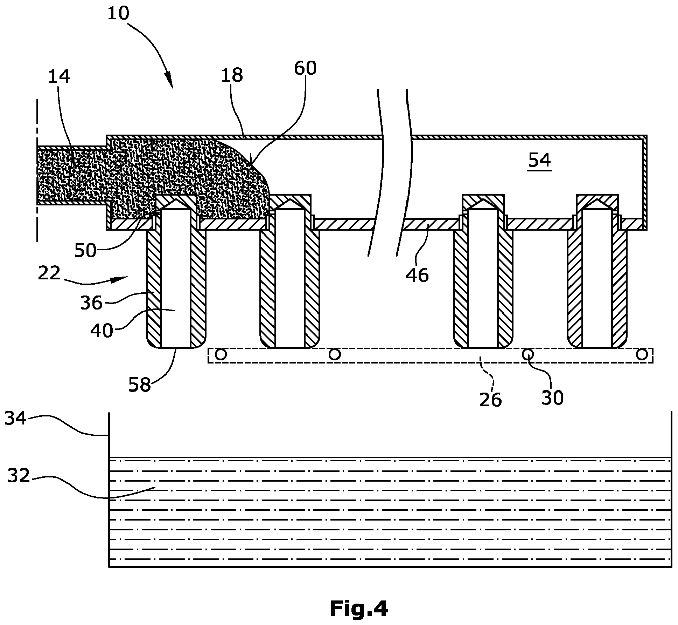

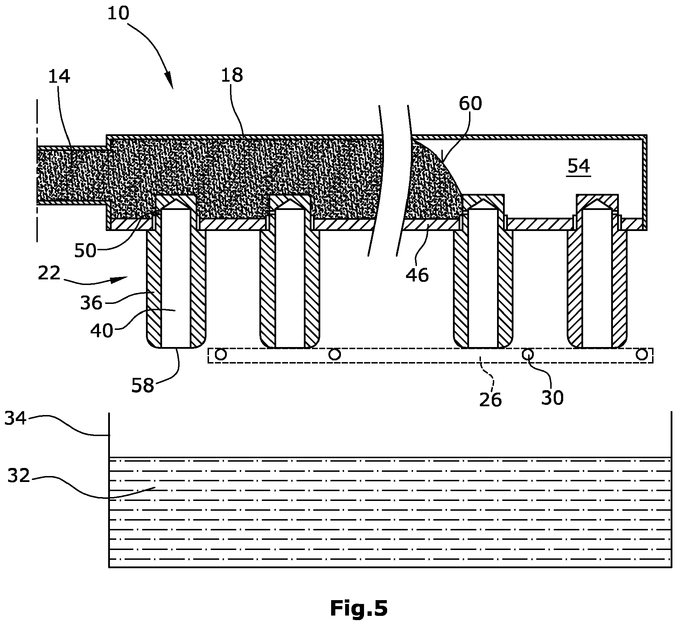

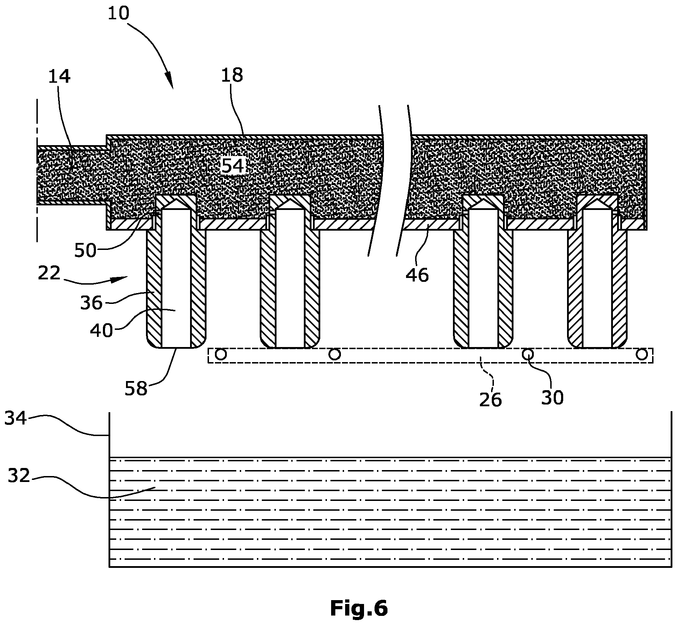

Die einzelnen Phasen während des Befüllens der Verteilerkammer 18 mit dem fließfähigen Tropfenmaterial 14 sind in den Fign. 3 bis 6 gezeigt. Zu erkennen ist, wie sich die Front 60 des in der Verteilerkammer 18 des strömenden fließfähigen Materials 14 vorbewegt und nach und nach das fließfähige Material 14 an sämtlichen Drosselbohrungen 50 ansteht (siehe Fig. 6). Zur Verhinderung eines potentiellen eingeschlossenen Gas- oder Lufttotvolumens in der Verteilerkammer 18 kann eine (nicht dargestellte) Entlüftungsöffnung vorgesehen sein, die nach vollständiger Befüllung der Verteilerkammer 18 mit fließfähigem Material 14 verschlossen wird.

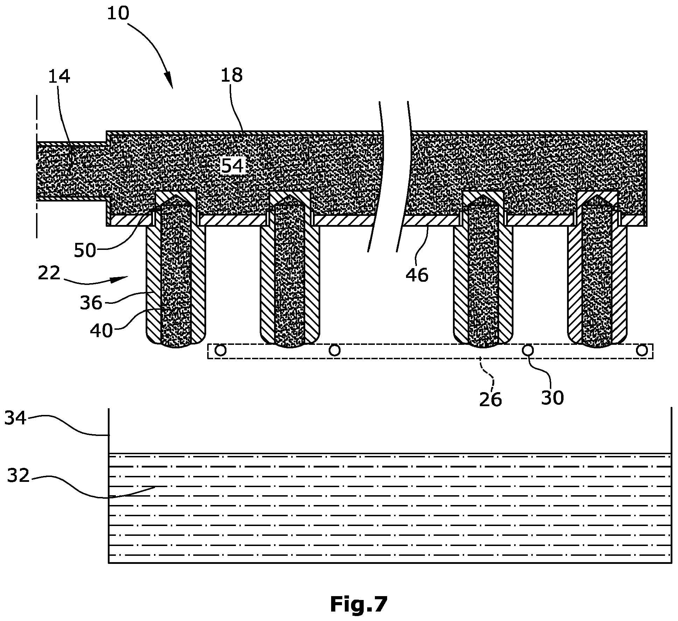

Erst ab diesem Zeitpunkt beginnt das fließfähige Material 14, durch die Drosselbohrungen 50 sämtlicher Austrittsstutzen 22 hindurch zu strömen, und zwar in Folge des Drucks, mit dem das fließfähige Material 14 der Verteilerkammer 18 zugeführt wird. Das aus den Drosselbohrungen 50 austretende fließfähige Material gelangt in die Austrittskanäle 40, in denen sich wiederum gleichförmig voranschreitende Strömungsfronten einstellen, bis das fließfähige Material 14 an den Austrittsöffnungen 58 ansteht (siehe Fig. 7).

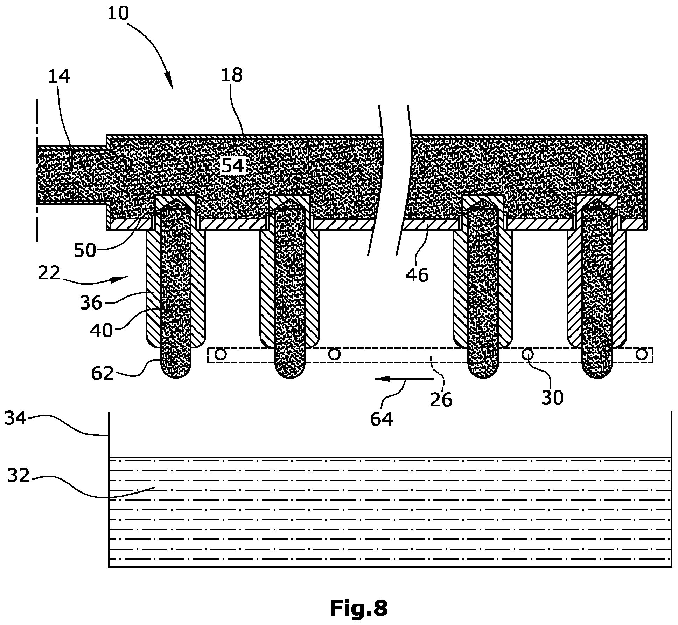

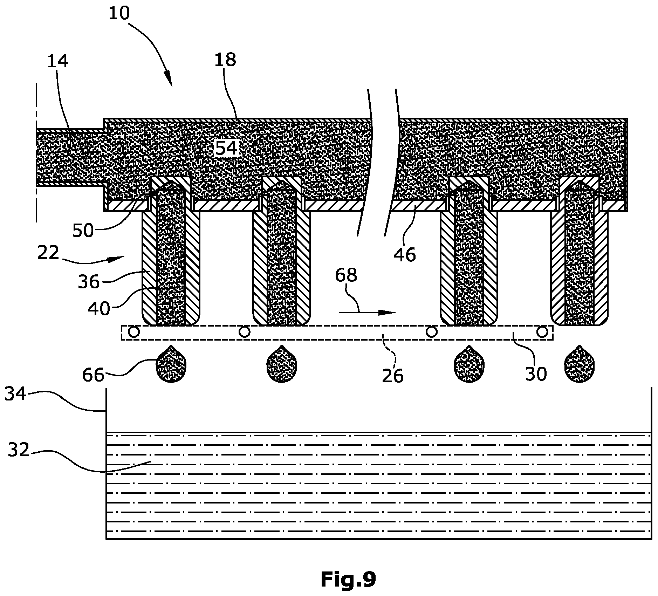

Das fließfähige Material 14 wird bei der weiteren Zufuhr zur Verteilerkammer 18 aus den einzelnen Austrittsöffnungen 58 als Materialstränge 62 austreten, und zwar im Wesentlichen drucklos. Wenn die zur Herstellung eines Tropfens und damit zur Herstellung einer Kugel erforderliche Menge an fließfähigem Material 14 aus den Austrittsöffnungen 58 ausgetreten ist, werden die Materialstränge 62 von den Austrittsöffnungen 58 abgestreift oder in anderer Weise getrennt. Hierzu wird die Abstreifeinheit 26 in Richtung des Pfeils 64 der Fig. 8 seitwärts bewegt, so dass die fadenartigen Abstreifelemente 28 die Materialstränge 62 durchschneiden, wodurch sich einzelne Tropfen 66 bilden, wie es in Fig. 9 gezeigt ist. Die Tropfen 66 fallen nach unten und gelangen, ggf. bereits in Kugelform, in das Tropfenauffangbehältnis 34 und werden von dort aus weiterverarbeitet, worauf im Folgenden nicht eingegangen werden soll, da man sich hier eine unzählige Variation von Weiterbehandlungsmethoden und Maßnahmen vorstellen kann.

In der Zwischenzeit tritt weiterhin fließfähiges Material 14 aus den Austrittsöffnungen 58 heraus. Sobald sich wiederum Materialaustrittsstränge 62 gebildet haben, deren Menge derjenigen für die herzustellenden Tropfen entspricht, bewegt sich die Abstreifeinheit 26 zurück in Richtung des Pfeils 68, so dass wiederum ein nächster Tropfensatz entsteht. In diesem Ausführungsbeispiel ist die Abstreifeinheit 26 vor- und zurückbewegbar ausgeführt. Bei entsprechendem apparativem Aufwand könnte man sich auch eine förderbandartige Anlage vorstellen, die die Drähte bzw. Abstreifelemente kontinuierlich an den Austrittsöffnungen 58 vorbei- und oberhalb der Verteilerkammer bzw. unterhalb des Tropfenauffangbehälters 34 zurückführt. Drehende Bewegungen der Abstreifeinheit 26 bzw. von deren Abstreifelementen 28 können auch realisiert werden. Die Relativbewegung der Abstreif- bzw. Trennvorrichtung und der Verteilerkammer kann auch durch gleichzeitige, insbesondere gegensinnige Bewegung beider oder durch Bewegung der Verteilerkammer gegenüber der Trennvorrichtung erfolgen.

Damit verhindert werden kann, dass aus den Drosselbohrungen 50 austretendes, in einen Austrittskanal 40 gelangendes fließfähiges Material nicht direkt "im freien Fall" durch den Austrittskanal 40 und die Austrittsöffnung 58 hindurchfällt, sollte darauf geachtet werden, dass die Projektion der Drosselbohrung 50 außerhalb der Austrittsöffnung 58 liegt. Je nach Anordnung der Drosselbohrung 50 und insbesondere je nach Abstand der Drosselbohrung 50 von der Austrittsöffnung 58 kann die Drosselbohrung 50 also auch unter einem Winkel a (siehe Fig. 2) ausgerichtet sein, der zwischen größer 0 Grad und 90 Grad oder aber auch bis zu 180 Grad zur Achse 52 des Austrittskanals 40 verläuft. Damit sich das fließfähige Material innerhalb des Austrittskanals 40 über dessen gesamten Querschnitt ausgebreitet hat, bevor es die Austrittsöffnung 58 erreicht, ist neben der zuvor beschriebenen speziellen Winkellage von Drosselbohrungsachse und Austrittskanalachse auch noch die Viskosität des fließfähigen Materials zu berücksichtigen. Hier können leider keine konkreteren konstruktiven Maße odgl. Dimensionen angegeben werden; vielmehr sollte durch Versuche die Dimensionierung der Austrittsstutzen 22, was die Querschnitte von Drosselbohrung und Austrittskanal betrifft, ermittelt werden, was anhand der Fließeigenschaften des jeweils zu vertropfenden Materials 14 erfolgen sollte.

### BEZUGSZEICHENLISTE

10 Vertropfungsvorrichtung
12 Reservoir für das fließfähige, zu vertropfende Material
13 (Zuführ-)Leitung
14 fließfähiges Material (Tropfenmaterial)
16 Pumpe
18 Verteilerkammer
20 Einlassöffnung der Verteilerkammer
22 Austrittsstutzen der Verteilerkammer
24 Trennvorrichtung zur Abtrennung eines Tropfens
26 Abstreifeinheit
28 Abstreifelement der Abstreifeinheit
30 Trennelemente der Trennvorrichtung
32 (Auffang-)Flüssigkeit
34 Tropfenauffangbehälter
36 Körper des Austrittsstutzens
38 Sacklochausnehmung im Austrittsstutzen
40 Austrittskanal im Austrittsstutzen
42 geschlossenes Ende des Austrittsstutzens
44 Öffnungen in der Verteilerkammer für die Austrittsstutzen
46 Bodenwand der Verteilerkammer
48 Bodenwand der Sacklochausnehmung
50 Drosselbohrung im Austrittsstutzen
52 Achse des Austrittskanals
54 Hohlraum der Verteilerkammer
56 Austrittsende des Austrittsstutzens
58 Austrittsöffnung des Austrittsstutzens
60 Strömungsfront des fließfähigen Materials
62 Materialaustrittsstränge
64 Bewegungspfeil
66 Tropfen
68 Bewegungspfeil

## Patentansprüche

1. Vorrichtung zur Herstellung von Tropfen aus einem fließfähigen Material, mit
- einem Reservoir (12) für das fließfähige Material (14) und
- einer Verteilerkammer (18) mit einer Einlassöffnung (20) zum Zuführen des fließfähigen Materials (14) und mit mehreren Austrittsöffnungen (58) für den Austritt des fließfähigen Materials (14) in Form von einzelnen Materialaustrittssträngen (62),
- wobei jede Austrittsöffnung (58) von einem Austrittsstutzen (22) gebildet ist und
- wobei sich innerhalb des Austrittsstutzens (22) ein in der Austrittsöffnung (58) endender Austrittskanal (40) befindet,
**dadurch gekennzeichnet ,**
- **dass** der Austrittsstutzen (22) zur Fluidverbindung des Austrittskanals (40) mit der Verteilerkammer (18) ferner mit einer Drosselbohrung (50) versehen ist, die ausgehend von der Verteilerkammer (18) in den Austrittskanal (40) einmündet.

2. Vorrichtung nach Anspruch 1, **dadurch gekennzeichnet, dass** der Austrittskanal (40) des Austrittsstutzens (22) als Sacklochausnehmung (38) mit einer Innenseite und einem Boden ausgebildet ist und dass die Drosselbohrung (50) im Bodenbereich der Sacklochausnehmung (38) entweder an dem Boden oder an der Innenseite der Sacklochausnehmung (38) endet.

3. Vorrichtung nach Anspruch 2, **dadurch gekennzeichnet, dass** sich die Drosselbohrung (50), an der Innenseite der Sacklochausnehmung (38) endend, von der Außenseite des Austrittsstutzens (22) aus bis zum Austrittskanal (40) erstreckt.

4. Vorrichtung nach einem der Ansprüche 1 bis 3, **dadurch gekennzeichnet, dass** die axiale Verlängerung der Drosselbohrung (50) oder von deren in den Austrittskanal (40) führenden Einmündungsöffnung in den Austrittskanal (40) hinein nicht durch die Austrittsöffnung (58) hindurch verläuft.

5. Vorrichtung nach einem der Ansprüche 1 bis 4, **dadurch gekennzeichnet, dass** die Drosselbohrung (50) in einem Winkel ihrer Achse (52) von ungleich 0°, insbesondere in einem Winkel von größer oder kleiner 45° und vorzugsweise in einem Winkel von im Wesentlichen 90° zur Achse (52) des Austrittskanals (40) in diesen einmündet und/oder dass in der lichten Verbindung der Drosselbohrung (50) und der Austrittsöffnung (58) Sperr-, Prall-, Sieb- o.dgl. Blockierelemente angeordnet sind, die ggf. auch perforiert sind.

6. Vorrichtung nach einem der Ansprüche 1 bis 5, **dadurch gekennzeichnet, dass** die Drosselbohrung (50) als in einer zylindrischen Wand des Austrittsstutzens (22) angeordnete Drosselöffnung ausgebildet ist.

7. Vorrichtung nach einem der Ansprüche 1 bis 6, **dadurch gekennzeichnet, dass** der Stutzen (22) zwei gegenüberliegende Enden (56) aufweist, wobei die Austrittsöffnung (58) an dem einen Ende (56) angeordnet ist und sich die Drosselbohrung (50) an dem anderen Ende (56) befindet.

8. Vorrichtung nach einem der Ansprüche 1 bis 7, **dadurch gekennzeichnet, dass** das mit der Drosselbohrung (50) versehene Ende (56) des Austrittsstutzens (22) ein Gewinde zum Gewindeeingriff mit einer Gewindeöffnung der Verteilerkammer (18) aufweist oder auf andere Weise an der Verteilerkammer (18) insbesondere abnehmbar gehalten ist, z. B. durch Bajonett- oder Klemmverschluss oder eine andere Art von Schnellverschluss.

9. Vorrichtung nach einem der Ansprüche 1 bis 8, **gekennzeichnet durch** eine Abtrenneinheit (24) zum Abtrennen von einzelne Tropfen (66) bildenden Teilvolumina von den Materialaustrittssträngen (62) **durch** Abschneiden der jeweils aus den Austrittsöffnungen (58) ausgetretenen Abschnitte der Materialaustrittsstränge,

10. Vorrichtung nach Anspruch 9, **dadurch gekennzeichnet, dass** die Abtrenneinheit (24) als Abstreifeinheit (26) zum Abtrennen von einzelne Tropfen (66) bildenden Teilvolumina von den Materialaustrittssträngen (62) durch Abstreifen der jeweils aus den Austrittsöffnungen (58) ausgetretenen Abschnitte der Materialaustrittsstränge (62) aufweist.

11. Vorrichtung nach Anspruch 10, **dadurch gekennzeichnet, dass** die Abstreifeinheit (26) mindestens ein Abstreifelement (28) mit einer Abstreifkante aufweist und dass das Abstreifelement (28) strangförmig und insbesondere als Faden, Draht, Seil, Schnur o.dgl. im Querschnitt insbesondere rundes Element ausgebildet ist und/oder dass zumindest die Abstreifkante des Abstreifelements (28) mit einer für die fließfähige Masse hydrophoben Beschichtung wie z. B. Polytetrafluorethylen versehen ist.

12. Vorrichtung nach einem der Ansprüche 1 bis 11, ferner **gekennzeichnet durch** einen Tropfenauffangbehälter (34) zur Aufnahme einer Flüssigkeit (32), mit der das fließfähige Material (14) zur Erstarrung zumindest des Außenbereichs eines Tropfens (66) zusammenwirkt oder die hinsichtlich des fließfähigen Materials (14) inert ist.

13. Verwendung der Vorrichtung nach einem der vorhergehenden Ansprüche (i) zur Herstellung von das fließfähige Material (14) aufweisenden Kugeln für Körperpflege-, Reinigungs-, Haushalts- und Nahrungsmittel, Getränke, Kosmetika, Medikamente und/oder andere industrielle Anwendungen z. B. in der Chemie, insbesondere bei verfahrenschemischen Anlagen und Prozessen oder als Spielzeugartikel oder zu Dekorationszwecken als z. B. Accessoires, oder (ii) zur Benetzung von Oberflächen oder Dosierung von Flüssigkeiten.

## Claims

1. Device for the production of drops from a flowable material, comprising
- a reservoir (12) for the flowable material (14), and
- a distribution chamber (18) having an inlet opening (20) for supplying the flowable material (14) and having a plurality of outlet openings (58) for discharge of the flowable material (14) in the form of individual material discharge strands (62),
- wherein each outlet opening (58) is formed by an outlet connection piece (22) and
- wherein, internally of the outlet connection piece (22), an outlet channel (40) is arranged which terminates in the outlet opening (58),
**characterized in**
- **that** the outlet connection piece (22) for fluid connection of the outlet channel (40) to the distribution chamber (18) is further provided with a restrictor bore (50) which, starting from the distribution chamber (18), opens into the outlet channel (40).

2. Device according to claim 1, **characterized in that** the outlet channel (40) of the outlet connection piece (22) is formed as a blind hole recess (38) having an inner side and a bottom, and that the restrictor bore (50) terminates, in the bottom region of the blind hole recess (38), either at the bottom or at the inner side of the blind hole recess (38).

3. Device according to claim 2, **characterized in that** the restrictor bore (50), terminating at the inner side of the blind hole recess (38), extends from the outer side of the outlet connection piece (22) to the outlet channel (40).

4. Device according to any one of claims 1 to 3, **characterized in that** the axial extension of the restrictor bore (50) or of the restrictor bore entrance opening leading into the outlet channel (40), does not pass through the outlet opening (58).

5. Device according to any one of claims 1 to 4, **characterized in that** the restrictor bore (50) enters the outlet channel (40) at an angle of the restrictor bore axis (52) not equal to 0°, particularly at an angle larger or smaller than 45° and preferably at an angle of substantially 90° relative to the axis (52) of the outlet channel (40), and/or that, in the clear connection between the restrictor bore (50) and the outlet opening (58), there are arranged locking, baffle, screen or the like blocking elements that optionally are also perforated.

6. Device according to any one of claims 1 to 5, **characterized in that** the restrictor bore (50) is formed as a restrictor opening arranged in a cylindrical wall of the outlet connection piece (22).

7. Device according to any one of claims 1 to 6, **characterized in that** the connection piece (22) comprises two opposite ends (56), wherein the outlet opening (58) is arranged at one end (56) and the restrictor bore (50) is arranged at the other end (56).

8. Device according to any one of claims 1 to 7, **characterized in that** the end (56) of the outlet connection piece (22) provided with the restrictor bore (50) comprises a thread for threaded engagement with a threaded opening of the distribution chamber (18) or is held in another manner on the distribution chamber (18), particularly in a removable manner, e.g. by a bayonet lock or a clamping coupling or another type of quick-locking mechanism.

9. Device according to any one of claims 1 to 8, **characterized by** a severing unit (24) for severing partial volumes forming individual drops (66) from the material discharge strands (62) by cutting off the respective portions of the material discharge strands issued from the outlet openings (58).

10. Device according to claim 9, **characterized in that** the severing unit (24) comprises a strip-off unit (26) for severing partial volumes forming individual drops (66) from the material discharge strands (62) by stripping off the respective portions of the material discharge strands (62) issued from the outlet openings (58).

11. Device according to claim 10, **characterized in that** the strip-off unit (26) comprises at least one strip-off element (28) having a strip-off edge and that the strip-off element (28) is string-shaped and particularly is formed as a filament, a wire, a rope, a cord or the like, particularly of a round cross section, and/or that at least the strip-off edge of the strip-off element (28) is provided with a coating, such as e.g. polytetrafluoroethylene, that is hydrophobic toward the flowable mass.

12. Device according to any one of claims 1 to 11, further **characterized by** a drop receptacle (34) for collection of a liquid (32) with which the flowable material (14) cooperates for solidification at least of the external region of a drop (66) or which is inert with respect to the flowable material (14).

13. Use of the device according to any one of previous claims (i) for the production of globules comprising the flowable material (14) for body care, cleaning, household and food substances, beverages, cosmetics, medicants, and/or other industrial applications e.g. in chemistry, particularly in process-chemistry plants and processors, or as toy articles or for decorative purposes, e.g. as accessories, or (ii) for the wetting of surfaces or the dosing of liquids.

## Revendications

1. Dispositif de production de gouttes à partir d'un matériau à écoulement libre, le dispositif comprenant
- un réservoir (12) destiné au matériau à écoulement libre (14) et
- une chambre de distribution (18) pourvue d'une ouverture d'entrée (20) l'alimentation en matériau à écoulement libre (14) et d'une pluralité d'ouvertures de sortie (58) destinée à la sortie du matériau à écoulement libre (14) sous la forme de jets de sortie de matériau individuels (62)
- chaque ouverture de sortie (58) étant formée par une buse de sortie (22) et
- un conduit de sortie (40) qui se termine dans l'ouverture de sortie (58) se trouvant à l'intérieur de la buse de sortie (22),
**caractérisé en ce que**
- la buse de sortie (22) est en outre pourvue d'un trou d'étranglement (50), qui part de la chambre de distribution (18) et débouche dans le conduit de sortie (40), pour réaliser la communication fluidique du conduit de sortie (40) avec la chambre de distribution (18).

2. Dispositif selon la revendication 1, **caractérisé en ce que** le conduit de sortie (40) de la buse de sortie (22) est conçu comme un évidement borgne (38) pourvue d'une face intérieure et d'un fond et **en ce que** le trou d'étranglement (50), se termine dans la région inférieure de l'évidement borgne (38), soit au niveau du fond soit sur la face intérieure de l'évidement borgne (38).

3. Dispositif selon la revendication 2, **caractérisé en ce que** le trou d'étranglement (50), qui se termine sur la face intérieure de l'évidement borgne (38), s'étend sur la face extérieure de la buse de sortie (22) jusqu'au conduit de sortie (40).

4. Dispositif selon l'une des revendications 1 à 3, **caractérisé en ce que** l'extension axiale du trou d'étranglement (50) ou de l'ouverture d'embouchure (40) de celui-ci menant au conduit de sortie (40) s'étend jusque dans le conduit de sortie (40) sans passer par l'ouverture de sortie (58).

5. Dispositif selon l'une des revendications 1 à 4, **caractérisé en ce que** le trou d'étranglement (50) débouche dans le conduit de sortie (40) de telle sorte que l'angle de l'axe (52) dudit trou d'étranglement forme un angle différente de 0°, notamment un angle supérieur ou inférieur à 45° et de préférence un angle sensiblement égal à 90°, par rapport à l'axe (52) du conduit de sortie (40) et/ou **en ce que** des éléments de blocage, de déflexion, de tamisage ou similaire, qui peuvent également être perforés, sont disposés dans la liaison intérieure du trou d'étranglement (50) et de l'ouverture de sortie (58).

6. Dispositif selon l'une des revendications 1 à 5, **caractérisé en ce que** le trou d'étranglement (50) est réalisé sous la forme d'une ouverture d'étranglement ménagée dans une paroi cylindrique de la buse de sortie (22) .

7. Dispositif selon l'une des revendications 1 à 6, **caractérisé en ce que** la buse (22) comporte deux extrémités opposées (56), l'ouverture de sortie (58) étant disposée à une extrémité (56) et le trou d'étranglement (50) étant situé à l'autre extrémité (56).

8. Dispositif selon l'une des revendications 1 à 7, **caractérisé en ce que** l'extrémité (56), pourvue du trou d'étranglement (50), de la buse de sortie (22) comporte un filetage destiné à l'engagement par vissage avec une ouverture filetée de la chambre de distribution (18) ou est maintenue d'une autre manière sur la chambre de distribution (18), notamment de manière amovible, par exemple par fermeture à baïonnette ou par serrage ou par un autre type de fermeture rapide.

9. Dispositif selon l'une des revendications 1 à 8, **caractérisé par** une unité de séparation (24) destinée à séparer des volumes partiels, formant des gouttes individuelles (66), des jets de sortie de matériau (62) en coupant les portions des jets de sortie de matériau, lesquelles sortent de chacune des ouvertures de sorties (58) .

10. Dispositif selon la revendication 9, **caractérisé en ce que** l'unité de séparation (24) se présente comme une unité de raclage (26) destinée à séparer des volumes partiels, formant des gouttes individuelles (66), des jets de sortie de matériau (62) en raclant les portions des jets de sortie de matériau (62), lesquelles sortent de chacune des ouvertures de sorties (58).

11. Dispositif selon la revendication 10, **caractérisé en ce que** l'unité de raclage (26) comporte au moins un élément racleur (28) pourvu d'un bord racleur et **en ce que** l'élément racleur (28) est réalisé sous la forme de barre et notamment de fil, de fil métallique, de câble, de corde ou d'un élément analogue en particulier rond en coupe transversale et/ou **en ce qu'**au moins le bord racleur de l'élément racleur (28) est pourvu d'un revêtement hydrophobe tel que par exemple du polytétrafluoroéthylène, vis-à-vis de la masse à écoulement libre.

12. Dispositif selon l'une des revendications 1 à 11, **caractérisé en outre par** un récipient collecteur de gouttes (34) destiné à recevoir un liquide (32) avec lequel le matériau à écoulement libre (14) coopère pour solidifier au moins la région extérieure d'une goutte (66) ou qui est inerte vis-à-vis du matériau à écoulement libre (14).

13. Utilisation du dispositif selon l'une des revendications précédentes (i) pour la fabrication de billes comportant le matériau à écoulement libre (14) et destinées à des produits de soins corporels, des produits de nettoyage, des produits de ménage, des produits alimentaires, des boissons, des produits cosmétiques, des médicaments et/ou d'autres applications industrielles par exemple dans le domaine de la chimie, en particulier dans les systèmes et processus de chimie des procédés ou des jouets ou pour la décoration par exemple des accessoires, ou (ii) pour le mouillage de surfaces ou le dosage de liquides.
